# EUROPEAN PATENT APPLICATION

(11) **EP 3 528 416 A1**
(43) Date of publication of application: **21.08.2019**
(21) Application number: 17866995.8
(22) Date of filing: 03.11.2017
(51) Int. Cl.: H04L 5/00

(54) **SIGNAL TRANSMISSION METHOD AND APPARATUS**

(30) Priority: 04.11.2016 CN 201610963254
(71) Applicant: Huawei Technologies Co., Ltd., Longgang District Shenzhen, Guangdong 518129 (CN)
(72) Inventor: LIU, Jianqin, Shenzhen Guangdong 518129 (CN); LIU, Kunpeng, Shenzhen Guangdong 518129 (CN)
(74) Representative: Epping - Hermann - Fischer
(86) International application number: PCT/CN2017/109417
(87) International publication number: WO 2018/082680

(57) **Abstract**

Embodiments of this application provide a signal transmission method and apparatus. The method includes: determining, by a network device, a reference signal resource pool; sending, by the network device, indication information to a terminal device; sending, by the network device, first configuration information and/or second configuration information to the terminal device based on the reference signal resource pool; and sending, by the network device, the first-type reference signal to the terminal device based on the first configuration information, and/or sending, by the network device, the second-type reference signal to the terminal device based on the second configuration information. By using the signal transmission method and apparatus in the embodiments of this application, resources used for different types of reference signals can be allocated flexibly, thereby improving resource utilization.

## Description

This application claims priority to Chinese Patent Application No. 201610963254.2, filed with the China National Intellectual Property Administration on November 4, 2016 and entitled "SIGNAL TRANSMISSION METHOD AND APPARATUS", which is incorporated herein by reference in its entirety.

### TECHNICAL FIELD

Embodiments of this application relate to the communications field, and more specifically, to a signal transmission method and apparatus.

### BACKGROUND

In a wireless communications system, to improve transmission efficiency while ensuring transmission reliability, a network device usually estimates quality of a radio channel used to transmit a signal, and determines a scheduling scheme based on the quality of the radio channel. In a current wireless communications system, quality information of a radio channel is usually obtained by transmitting a reference signal. Different types of reference signals are usually used in a communications system. One type of reference signal is used for channel quality measurement or channel state information (channel state information, CSI) measurement, for example, cell-specific reference signals (cell-specific reference signal, CRS) and channel state information-reference signals (channel state information-reference signal, CSI-RS). Another type of reference signal is used for beam management. The reason is that in a beamforming technology, to track changes of a formed beam, a terminal device may select one or more optimal formed beams based on channel quality measurement performed by using a plurality of reference signals in different formed beams.

In the prior art, a reference signal used for beam management and a reference signal used for CSI measurement are configured separately. As a result, resources used for reference signals cannot be allocated flexibly, and resource utilization is relatively low.

### SUMMARY

In view of this, embodiments of this application provide a signal transmission method and apparatus, so that resources used for different types of reference signals can be allocated flexibly, thereby improving resource utilization.

According to a first aspect, a signal transmission method is provided, including: determining, by a network device, a reference signal resource pool, where a resource in the reference signal resource pool is used to send a first-type reference signal and/or a second-type reference signal; sending, by the network device, indication information to a terminal device, where the indication information is used to indicate a resource in the reference signal resource pool; sending, by the network device, first configuration information and/or second configuration information to the terminal device based on the reference signal resource pool, where the first configuration information is used to indicate a first resource that is in the reference signal resource pool and that is used to send the first-type reference signal, and the second configuration information is used to indicate a second resource that is in the reference signal resource pool and that is used to send the second-type reference signal; and sending, by the network device, the first-type reference signal to the terminal device based on the first configuration information, and/or sending, by the network device, the second-type reference signal to the terminal device based on the second configuration information.

Specifically, the network device may configure a reference signal resource pool that can be used for both beam management and obtaining channel quality information. To be specific, a resource in the reference signal resource pool can be used for both the first-type reference signal and the second-type reference signal. In this case, the network device may flexibly configure a resource in the reference signal resource pool for beam management and/or for obtaining channel quality information. For example, a resource in the reference signal resource pool is used only for the first-type reference signal when the second-type reference signal is not sent. Alternatively, a resource in the reference signal resource pool is used only for the second-type reference signal when the first-type reference signal is not sent. Alternatively, a resource in the reference signal resource pool is appropriately and dynamically allocated to the first-type reference signal and the second-type reference signal. This is not limited in the embodiments of this application.

According to the signal transmission method in this embodiment of this application, the network device determines the reference signal resource pool before sending the first-type reference signal and/or the second-type reference signal, and configures a resource in the reference signal resource pool for the first-type reference signal and/or the second-type reference signal, so that resources used for different types of reference signals can be allocated flexibly, to share resources among different types of reference signals, thereby improving utilization of reference signal resources.

In a first possible implementation of the first aspect, the first resource includes the second resource.

Specifically, M resources used to send the first-type reference signal may be first selected, and N resources selected from the M resources are used as resources to send the second-type reference signal. In this way, the N resources may be shared to send the first-type reference signal and the second-type reference signal, to implement resource sharing, thereby improving resource utilization.

With reference to the foregoing possible implementation of the first aspect, in a second possible implementation of the first aspect, the second resource is all or a part of a remaining resource other than the first resource in the reference signal resource pool; or the first resource is all or a part of a remaining resource other than the second resource in the reference signal resource pool.

Specifically, if the first resource is all of the remaining resource other than the second resource in the reference signal resource pool, or the second resource is all of the remaining resource other than the first resource in the reference signal resource pool, it may be understood that the resource used for the first-type reference signal and the resource used for the second-type reference signal are in a complementary relationship. In this case, the network device only needs to send the first configuration information to the terminal device. After receiving the first configuration information and determining the resource used for the first-type reference signal, the terminal device may determine that the remaining resource other than the resource used for the first-type reference signal in the reference signal resource pool is all used to send the second-type reference signal. In this way, the network device does not need to send the second configuration information to the terminal device, thereby reducing required configuration signaling overheads.

Alternatively, the first resource may be a part of a remaining resource other than the second resource in the reference signal resource pool, or the second resource may be a part of a remaining resource other than the first resource in the reference signal resource pool. In this case, if the network device needs to send the first-type reference signal and the second-type reference signal, the network device needs to send both the first configuration information and the second configuration information. Optionally, the first configuration information and the second configuration information may be indicated by same physical layer signaling, or may be separately indicated by different physical layer signaling. This is not limited in the embodiments of this application.

With reference to the foregoing possible implementations of the first aspect, in a third possible implementation of the first aspect, the indication information includes at least one piece of the following information: a time-domain symbol quantity of the resource in the reference signal resource pool, a time-domain symbol location of the resource in the reference signal resource pool, a frequency-domain resource location of the resource in the reference signal resource pool, and port information of the resource in the reference signal resource pool.

With reference to the foregoing possible implementations of the first aspect, in a fourth possible implementation of the first aspect, the sending, by the network device, indication information to a terminal device includes: sending, by the network device, the indication information to the terminal device by using higher layer signaling and/or physical layer signaling.

With reference to the foregoing possible implementations of the first aspect, in a fifth possible implementation of the first aspect, the sending, by the network device, first configuration information and/or second configuration information to the terminal device based on the reference signal resource pool includes: sending, by the network device, the first configuration information and/or the second configuration information to the terminal device by using the higher layer signaling and/or the physical layer signaling.

It should be understood that the higher layer signaling may be radio resource control (radio resource control, RRC) signaling, and the physical layer signaling may be downlink control information (downlink control information, DCI) signaling. The higher layer signaling and the physical layer signaling may be other signaling. This is not limited in the embodiments of this application.

According to a second aspect, another signal transmission method is provided, including: receiving, by a terminal device, indication information sent by a network device, where the indication information is used to indicate a resource in a reference signal resource pool, and a resource in the reference signal resource pool is used to send a first-type reference signal and/or a second-type reference signal; receiving, by the terminal device, first configuration information and/or second configuration information sent by the network device, where the first configuration information is used to indicate a first resource that is in the reference signal resource pool and that is used to send the first-type reference signal, and the second configuration information is used to indicate a second resource that is in the reference signal resource pool and that is used to send the second-type reference signal; and receiving, by the terminal device based on the indication information and the first configuration information and/or the second configuration information, the first-type reference signal and/or the second-type reference signal sent by the network device.

In a first possible implementation of the second aspect, the first resource includes the second resource.

With reference to the foregoing possible implementation of the second aspect, in a second possible implementation of the second aspect, the second resource is all or a part of a remaining resource other than the first resource in the reference signal resource pool; or the first resource is all or a part of a remaining resource other than the second resource in the reference signal resource pool.

With reference to the foregoing possible implementations of the second aspect, in a third possible implementation of the second aspect, the indication information includes at least one piece of the following information: a time-domain symbol quantity of the resource in the reference signal resource pool, a time-domain symbol location of the resource in the reference signal resource pool, a frequency-domain resource location of the resource in the reference signal resource pool, and port information of the resource in the reference signal resource pool.

With reference to the foregoing possible implementations of the second aspect, in a fourth possible implementation of the second aspect, the receiving, by a terminal device, indication information sent by a network device includes: receiving, by the terminal device by using higher layer signaling and/or physical layer signaling, the indication information sent by the network device.

With reference to the foregoing possible implementations of the second aspect, in a fifth possible implementation of the second aspect, the receiving, by the terminal device, first configuration information and/or second configuration information sent by the network device includes: receiving, by the terminal device by using the higher layer signaling and/or the physical layer signaling, the first configuration information and/or the second configuration information sent by the network device.

According to a third aspect, another signal transmission method is provided, including: sending, by a network device, third configuration information to a terminal device, where the third configuration information includes first port information of a port used to send a first-type reference signal and a second-type reference signal; determining, by the network device, fourth configuration information based on the third configuration information, where the fourth configuration information includes second port information of a remaining port used to send the second-type reference signal; sending, by the network device, the fourth configuration information to the terminal device; sending, by the network device, the first-type reference signal to the terminal device based on the third configuration information; and sending, by the network device, the second-type reference signal to the terminal device based on the third configuration information and the fourth configuration information.

According to the signal transmission method in this embodiment of this application, the network device configures shared port information for the first-type reference signal and the second-type reference signal, and then configures port information of a remaining port for the second-type reference signal, so that port resources can be shared, and repeated configuration of same port information can be avoided, thereby reducing signaling overheads.

In a first possible implementation of the third aspect, the first port information and the second port information include a quantity of antenna ports and/or a time-frequency domain resource mapping relationship of the antenna ports.

With reference to the foregoing possible implementation of the third aspect, in a second possible implementation of the third aspect, a quantity of first antenna ports used to send the first-type reference signal is M, a quantity of second antenna ports used to send the second-type reference signal is N, and a frequency-domain resource location pattern of the M first antenna ports is the same as a frequency-domain resource location pattern of M second antenna ports of the N second antenna ports, where M and N are integers greater than or equal to 1, and M is less than or equal to N.

With reference to the foregoing possible implementations of the third aspect, in a third possible implementation of the third aspect, the third configuration information includes information about the M first antenna ports, and the fourth configuration information includes information about N-M second antenna ports, other than the M first antenna ports, of the N second antenna ports.

With reference to the foregoing possible implementations of the third aspect, in a fourth possible implementation of the third aspect, the M first antenna ports are obtained by performing a virtual weighting operation based on the N second antenna ports.

With reference to the foregoing possible implementations of the third aspect, in a fifth possible implementation of the third aspect, the method further includes: sending, by the network device, a virtual weighting coefficient to the terminal device, where the virtual weighting coefficient is used to perform the virtual weighting operation.

With reference to the foregoing possible implementations of the third aspect, in a sixth possible implementation of the third aspect, a virtual weighting coefficient used to perform the virtual weighting operation is predefined.

With reference to the foregoing possible implementations of the third aspect, in a seventh possible implementation of the third aspect, the third configuration information and the fourth configuration information further include at least one piece of the following information: a time-domain resource location, a frequency-domain resource location, and a density of the first-type reference signal or the second-type reference signal.

According to a fourth aspect, another signal transmission method is provided, including: receiving, by a terminal device, third configuration information sent by a network device, where the third configuration information includes first port information of a port used to send a first-type reference signal and a second-type reference signal; receiving, by the terminal device, fourth configuration information sent by the network device, where the fourth configuration information includes second port information of a remaining port used to send the second-type reference signal; receiving, by the terminal device based on the third configuration information, the first-type reference signal sent by the network device; and receiving, by the terminal device based on the third configuration information and the fourth configuration information, the second-type reference signal sent by the network device.

In a first possible implementation of the fourth aspect, the first port information and the second port information include a quantity of antenna ports and/or a time-frequency domain resource mapping relationship of the antenna ports.

With reference to the foregoing possible implementation of the fourth aspect, in a second possible implementation of the fourth aspect, a quantity of first antenna ports used to send the first-type reference signal is M, a quantity of second antenna ports used to send the second-type reference signal is N, and a frequency-domain resource location pattern of the M first antenna ports is the same as a frequency-domain resource location pattern of M second antenna ports of the N second antenna ports, where M and N are integers greater than or equal to 1, and M is less than or equal to N.

With reference to the foregoing possible implementations of the fourth aspect, in a third possible implementation of the fourth aspect, the third configuration information includes information about the M first antenna ports, and the fourth configuration information includes information about N-M second antenna ports, other than the M first antenna ports, of the N second antenna ports.

With reference to the foregoing possible implementations of the fourth aspect, in a fourth possible implementation of the fourth aspect, the M first antenna ports are obtained by performing a virtual weighting operation based on the N second antenna ports.

With reference to the foregoing possible implementations of the fourth aspect, in a fifth possible implementation of the fourth aspect, the method further includes: receiving, by the terminal device, a virtual weighting coefficient sent by the network device, where the virtual weighting coefficient is used to perform the virtual weighting operation.

With reference to the foregoing possible implementations of the fourth aspect, in a sixth possible implementation of the fourth aspect, a virtual weighting coefficient used to perform the virtual weighting operation is predefined.

With reference to the foregoing possible implementations of the fourth aspect, in a seventh possible implementation of the fourth aspect, the third configuration information and the fourth configuration information further include at least one piece of the following information: a time-domain resource location, a frequency-domain resource location, and a density of the first-type reference signal or the second-type reference signal.

According to a fifth aspect, a signal transmission apparatus is provided, configured to perform the foregoing method in the first aspect or any possible implementation of the first aspect. Specifically, the apparatus includes units configured to perform the foregoing method in the first aspect or any possible implementation of the first aspect.

According to a sixth aspect, a signal transmission apparatus is provided, configured to perform the foregoing method in the second aspect or any possible implementation of the second aspect. Specifically, the apparatus includes units configured to perform the foregoing method in the second aspect or any possible implementation of the second aspect.

According to a seventh aspect, a signal transmission apparatus is provided, configured to perform the foregoing method in the third aspect or any possible implementation of the third aspect. Specifically, the apparatus includes units configured to perform the foregoing method in the third aspect or any possible implementation of the third aspect.

According to an eighth aspect, a signal transmission apparatus is provided, configured to perform the foregoing method in the fourth aspect or any possible implementation of the fourth aspect. Specifically, the apparatus includes units configured to perform the foregoing method in the fourth aspect or any possible implementation of the fourth aspect.

According to a ninth aspect, a signal transmission apparatus is provided and includes a receiver, a transmitter, a memory, a processor, and a bus system. The receiver, the transmitter, the memory, and the processor are connected by using the bus system. The memory is configured to store an instruction. The processor is configured to execute the instruction stored in the memory to control the receiver to receive a signal and control the transmitter to send a signal. When the processor executes the instruction stored in the memory, the execution enables the processor to perform the method in the first aspect or any possible implementation of the first aspect.

According to a tenth aspect, a signal transmission apparatus is provided and includes a receiver, a transmitter, a memory, a processor, and a bus system. The receiver, the transmitter, the memory, and the processor are connected by using the bus system. The memory is configured to store an instruction. The processor is configured to execute the instruction stored in the memory to control the receiver to receive a signal and control the transmitter to send a signal. When the processor executes the instruction stored in the memory, the execution enables the processor to perform the method in the second aspect or any possible implementation of the second aspect.

According to an eleventh aspect, a signal transmission apparatus is provided and includes a receiver, a transmitter, a memory, a processor, and a bus system. The receiver, the transmitter, the memory, and the processor are connected by using the bus system. The memory is configured to store an instruction. The processor is configured to execute the instruction stored in the memory to control the receiver to receive a signal and control the transmitter to send a signal. When the processor executes the instruction stored in the memory, the execution enables the processor to perform the method in the third aspect or any possible implementation of the third aspect.

According to a twelfth aspect, a signal transmission apparatus is provided and includes a receiver, a transmitter, a memory, a processor, and a bus system. The receiver, the transmitter, the memory, and the processor are connected by using the bus system. The memory is configured to store an instruction. The processor is configured to execute the instruction stored in the memory to control the receiver to receive a signal and control the transmitter to send a signal. When the processor executes the instruction stored in the memory, the execution enables the processor to perform the method in the fourth aspect or any possible implementation of the fourth aspect.

According to a thirteenth aspect, a signal transmission system is provided, where the system includes the apparatus in the fifth aspect or any possible implementation of the fifth aspect and the apparatus in the sixth aspect or any possible implementation of the sixth aspect; or
the system includes the apparatus in the ninth aspect or any possible implementation of the ninth aspect and the apparatus in the tenth aspect or any possible implementation of the tenth aspect.

According to a fourteenth aspect, another signal transmission system is provided, where the system includes the apparatus in the seventh aspect or any possible implementation of the seventh aspect and the apparatus in the eighth aspect or any possible implementation of the eighth aspect; or
the system includes the apparatus in the eleventh aspect or any possible implementation of the eleventh aspect and the apparatus in the twelfth aspect or any possible implementation of the twelfth aspect.

According to a fifteenth aspect, a computer readable medium is provided, configured to store a computer program, where the computer program includes instructions used to perform the method in the first aspect or any possible implementation of the first aspect.

According to a sixteenth aspect, a computer readable medium is provided, configured to store a computer program, where the computer program includes instructions used to perform the method in the second aspect or any possible implementation of the second aspect.

According to a seventeenth aspect, a computer readable medium is provided, configured to store a computer program, where the computer program includes instructions used to perform the method in the third aspect or any possible implementation of the third aspect.

According to an eighteenth aspect, a computer readable medium is provided, configured to store a computer program, where the computer program includes instructions used to perform the method in the fourth aspect or any possible implementation of the fourth aspect.

### BRIEF DESCRIPTION OF DRAWINGS

FIG. 1 is a schematic diagram of a communications system to which an embodiment of this application is applied;
FIG. 2 is a schematic flowchart of a signal transmission method according to an embodiment of this application;
FIG. 3 is a schematic flowchart of another signal transmission method according to an embodiment of this application;
FIG. 4 is a schematic block diagram of a signal transmission apparatus according to an embodiment of this application;
FIG. 5 is a schematic block diagram of another signal transmission apparatus according to an embodiment of this application;
FIG. 6 is a schematic block diagram of another signal transmission apparatus according to an embodiment of this application;
FIG. 7 is a schematic block diagram of another signal transmission apparatus according to an embodiment of this application;
FIG. 8 is a schematic block diagram of another signal transmission apparatus according to an embodiment of this application;
FIG. 9 is a schematic block diagram of another signal transmission apparatus according to an embodiment of this application;
FIG. 10 is a schematic block diagram of another signal transmission apparatus according to an embodiment of this application; and
FIG. 11 is a schematic block diagram of another signal transmission apparatus according to an embodiment of this application.

### DESCRIPTION OF EMBODIMENTS

The following describes technical solutions in embodiments of this application with reference to the accompanying drawings in the embodiments of this application.

It should be understood that the technical solutions of the embodiments of this application may be applied to various communications systems, such as a Global System for Mobile Communications (Global System for Mobile Communications, GSM) system, a Code Division Multiple Access (Code Division Multiple Access, CDMA) system, a Wideband Code Division Multiple Access (Wideband Code Division Multiple Access, WCDMA) system, a general packet radio service (general packet radio service, GPRS) system, a Long Term Evolution (Long Term Evolution, LTE) system, an LTE frequency division duplex (frequency division duplex, FDD) system, an LTE time division duplex (time division duplex, TDD) system, a Universal Mobile Telecommunications System (Universal Mobile Telecommunications System, UMTS), a Worldwide Interoperability For Microwave Access (Worldwide Interoperability For Microwave Access, WiMAX) communications system, and a future 5G communications system.

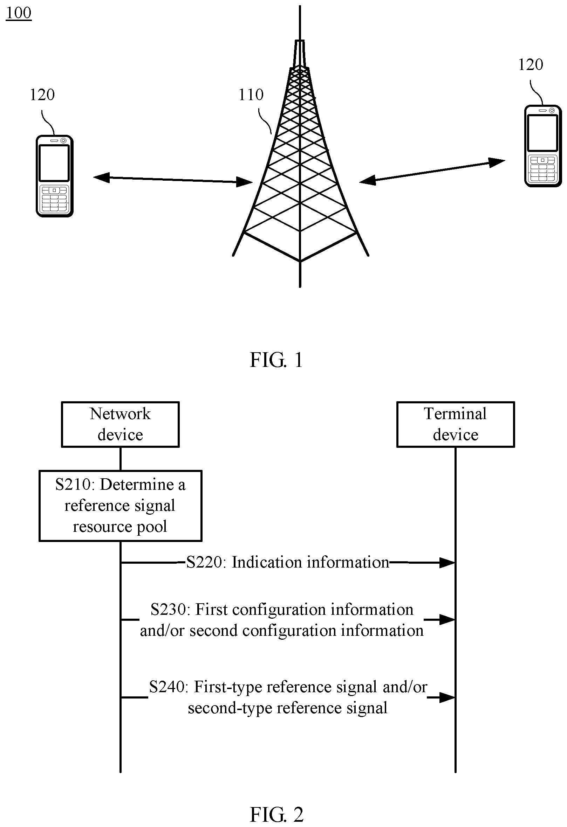

FIG. 1 shows a communications system 100 to which an embodiment of this application is applied. The communications system 100 may include at least one network device 110. The network device 100 may be a device such as a base station or a base station controller that communicates with a terminal device. Each network device 100 may provide communication coverage for a specific geographical area and may communicate with a terminal device (for example, UE) located in an area (cell) of the coverage. The network device 100 may be a base transceiver station (base transceiver station, BTS) in a GSM system or a Code Division Multiple Access (code division multiple access, CDMA) system, or may be a nodeB (nodeB, NB) in a WCDMA system, or may be an evolved nodeB (evolved nodeB, eNB or eNodeB) in an LTE system, or a radio controller in a cloud radio access network (cloud radio access network, CRAN), or the network device may be a relay station, an access point, an in-vehicle device, a wearable device, a network side device in a future 5G network, a network device in a future evolved public land mobile network (public land mobile network, PLMN), or the like.

The wireless communications system 100 further includes a plurality of terminal devices 120 located in a coverage area of the network device 110. The terminal device 120 may be mobile or fixed. The terminal device 120 may also be referred to as an access terminal, user equipment (User Equipment, UE), a subscriber unit, a subscriber station, a mobile station, a mobile console, a remote station, a remote terminal, a mobile device, a user terminal, a terminal, a wireless communications device, a user agent, a user apparatus, or the like. The access terminal may be a cellular phone, a cordless phone, a Session Initiation Protocol (Session Initiation Protocol, SIP) phone, a wireless local loop (wireless local loop, WLL) station, a personal digital assistant (personal digital assistant, PDA), a handheld device or a computing device having a wireless communication function, another processing device connected to a wireless modem, an in-vehicle device, a wearable device, a terminal device in a future 5G network, or a terminal device in a future evolved public land mobile network (public land mobile network, PLMN).

For example, FIG. 1 shows one network device and two terminal devices. Optionally, the communications system 100 may include a plurality of network devices, and another quantity of terminal devices may be included in a coverage area of each network device. This is not limited in this embodiment of this application.

Optionally, the wireless communications system 100 may further include another network entity such as a network controller and a mobility management entity. This embodiment of this application is not limited thereto.

In the prior art, to measure channel quality, a network device may send a plurality of reference signals to a terminal device, and configure that the terminal device needs to report N pieces of channel quality information. The terminal device receives the plurality of reference signals sent by the network device, scans and measures, based on the configuration by the network device, all the reference signals sent by the network device to obtain N pieces of optimal channel quality information, and reports the N pieces of optimal channel quality information to the network device.

With development of communications technologies, a signal transmission mechanism based on a beamforming technology may be used to receive and send a reference signal, so that a relatively high antenna gain is used to compensate for a loss during signal propagation, thereby ensuring significant improvements in parameters such as uplink coverage performance, an average cell throughput, and an edge user rate. The beamforming technology may be any one of beamforming in analog domain, beamforming in baseband domain, and hybrid beamforming. A beamformed signal may be a cell-specific reference signal, or may be a user-specific reference signal, or may be another reference signal.

Specifically, a beam management mechanism of signal transmission based on beamforming includes three main processes:
(1) selecting one or more optimal transmit and receive beam pairs, where a terminal device selects an optimal transmit beam and/or receive beam based on sweeping through different beams on a network device side;
(2) updating a transmit beam, where the terminal device updates a transmit beam based on sweeping through different transmit beams on the network device side; and
(3) updating a receive beam, where the terminal device updates a receive beam based on sweeping through a plurality of repeated and same transmit beams on the network device side.

The terminal device can track and update transmit and receive beams by using the foregoing beam management mechanism.

In the beamforming-based signal transmission mechanism, there may be two types of reference signals: One type of reference signal is used for channel quality measurement or channel state information (channel state information, CSI) measurement, for example, a cell-specific reference signal (cell-specific reference signal, CRS), and a channel state information-reference signal (channel state information-reference signal, CSI-RS). Another type of reference signal is used for beam management. The reason is that in a beamforming technology, to track changes of a formed beam, a terminal device may select one or more optimal formed beams based on channel quality measurement performed by using a plurality of reference signals in different formed beams.

However, in the prior art, a reference signal used for beam management and a reference signal used for CSI measurement are configured independently. A configuration of each type of reference signal includes at least one piece of information such as a frequency domain resource, a time domain resource, a quantity of ports, and a density of the reference signal. When such a method for configuring a reference signal is used, resources used for two types of reference signals cannot be flexibly shared and allocated, resulting in relatively low resource utilization.

Considering that there is an association relationship between a reference signal used for beam tracking and a reference signal used for CSI measurement, for example, because beamforming of the reference signal used for beam tracking is usually the same as beamforming of the reference signal used for CSI measurement, the reference signal used for beam tracking may also be used for CSI measurement, and the reference signal used for CSI measurement may also be used for beam tracking, so that the two types of reference signals may be shared and correlatively configured. Based on this, this embodiment of this application provides a method for configuring and sharing the two types of reference signals flexibly.

Reference signals used for beam tracking are collectively referred to as a first-type reference signal and reference signals used for CSI measurement are collectively referred to as a second-type reference signal below. However, it should be understood that this embodiment of this application is not limited thereto. The first-type reference signal and the second-type reference signal may be alternatively reference signals used for other purposes. Any configuration of two different reference signals is applicable to the method in this embodiment of this application. The first-type reference signal and the second-type reference signal may correspond to a same reference signal type or may correspond to different reference signal types. This is not limited in this embodiment of this application.

FIG. 2 is a schematic flowchart of a signal transmission method 200 according to an embodiment of this application. The method 200 may be applied to the system architecture 100 shown in FIG. 1. However, this embodiment of this application is not limited thereto.

S210: A network device determines a reference signal resource pool, where a resource in the reference signal resource pool is used to send a first-type reference signal and/or a second-type reference signal.

S220: The network device sends indication information to a terminal device, where the indication information is used to indicate a resource in the reference signal resource pool. Correspondingly, the terminal device receives the indication information.

S230: The network device sends first configuration information and/or second configuration information to the terminal device based on the reference signal resource pool, where the first configuration information is used to indicate a first resource that is in the reference signal resource pool and that is used to send the first-type reference signal, and the second configuration information is used to indicate a second resource that is in the reference signal resource pool and that is used to send the second-type reference signal. Correspondingly, the terminal device receives the first configuration information and/or the second configuration information.

S240: The network device sends the first-type reference signal to the terminal device based on the first configuration information, and/or the network device sends the second-type reference signal to the terminal device based on the second configuration information. Correspondingly, the terminal device receives the first-type reference signal and/or the second-type reference signal sent by the network device.

Specifically, the network device may configure a reference signal resource pool that can be used for both beam management and obtaining channel quality information. To be specific, a resource in the reference signal resource pool can be used for both the first-type reference signal and the second-type reference signal. In this case, the network device may flexibly configure a resource in the reference signal resource pool for beam management and/or for obtaining channel quality information. For example, a resource in the reference signal resource pool is used only for the first-type reference signal when the second-type reference signal is not sent. Alternatively, a resource in the reference signal resource pool is used only for the second-type reference signal when the first-type reference signal is not sent. Alternatively, a resource in the reference signal resource pool is appropriately and dynamically allocated to the first-type reference signal and the second-type reference signal. This is not limited in this embodiment of this application.

According to the signal transmission method in this embodiment of this application, the network device determines the reference signal resource pool before sending the first-type reference signal and/or the second-type reference signal, and configures a resource in the reference signal resource pool for the first-type reference signal and/or the second-type reference signal, so that resources used for different types of reference signals can be allocated flexibly, to share resources among different types of reference signals, thereby improving utilization of reference signal resources.

It should be understood that sequence numbers of the foregoing processes do not mean execution sequences. The execution sequences of the processes should be determined based on functions and internal logic of the processes, and should not be construed as any limitation on the implementation processes of this embodiment of this application.

It should be understood that the first-type reference signal and the second-type reference signal in this embodiment of this application are both beamformed reference signals. The two types of reference signals may be a cell-specific reference signal CRS, or may be a channel state information reference signal CSI-RS, or may be any other reference signals used for channel quality information measurement. This is not limited in this embodiment of this application. In addition, it should be understood that this embodiment of this application does not exclude that both the first-type reference signal and the second-type reference signal are reference signals without beamforming.

It should be further understood that for a reference signal used for beam tracking, in analog beamforming and hybrid beamforming technologies, it is assumed that P reference signals need to be sent in a time division manner to perform update training for a receive beam, where P is an integer greater than or equal to 1. Optionally, the plurality of reference signals that are sent in a time division manner may occupy a plurality of symbols in one subframe. The plurality of symbols may be a plurality of consecutive symbols in one subframe, or may be a plurality of nonconsecutive symbols in one subframe. For the reference signal used for beam tracking, channel quality measurement usually needs to be performed by using each of the P reference signals to obtain energy of each transmit or receive beam. Therefore, a time-domain resource location of a reference signal used for beam management may be a plurality of consecutive symbols or may be a plurality of nonconsecutive symbols. In addition, each of at least one reference signal used for sweeping and selection of a receive beam usually corresponds to a different receive beam, so that the terminal device can obtain an optimal receive beam based on measurement and training of at least one repeated and same reference signal.

For a reference signal used to obtain channel quality information, the terminal device needs to obtain, based on measurement of the reference signal, channel quality information such as a rank indicator (rank indicator, RI), a precoding matrix indicator (precoding matrix indicator, PMI), and a channel quality indication (channel quality indication, CQI), in addition to a beam index (beam index, BI) or a reference signal resource index such as a channel state information-reference signal index (CSI-RS index, CRI). Therefore, a time-domain symbol location and a time domain interval of this type of reference signal need to be as large as possible to track a frequency offset and a phase deflection between different slots of a same subframe. In an optimal implementation, a quantity of time-domain symbols for a reference signal used for channel quality information measurement should be at least 2 to implement desirable multi-symbol joint channel estimation. In addition, a further design objective of this type of reference signal is that in the at least two symbols, one symbol is located at a first half of a slot of a subframe and another symbol is located at a second half of the slot of the subframe.

Specifically, for selection and reporting of multi-level beam indices or reference signal resource indices, selection and reporting of an optimal transmit beam on a transmit side may be implemented in a multi-level manner. Specifically, beam obtaining and selection on the transmit side may be completed level by level in a manner of multi-level or multi-layer beam sweeping. For example, first-level beam sweeping corresponds to a first beam width, second-level beam sweeping corresponds to a second beam width, ..., and Q^{th}-level beam sweeping corresponds to a Q^{th} beam width, where Q is an integer greater than or equal to 1. In beam sweeping at each level, a receive side selects, based on a measurement result of channel quality, at least one corresponding optimal transmit beam at a level or beam width of the beam sweeping, and reports or notifies an index number of the optimal transmit beam to the transmit side.

Herein, an index number of an optimal beam corresponding to the first-level beam sweeping is denoted as a first optimal beam index, an index number of an optimal beam corresponding to the second-level beam sweeping is denoted as a second optimal beam index, ..., and an index number of an optimal beam corresponding to the Q^{th}-level beam sweeping is denoted as a Q^{th} optimal beam index. A report type of the first optimal beam index is a first report type, a report type of the second optimal beam index is a second report type, ..., and a report type of the Q^{th} optimal beam index is a Q^{th} report type.

The i^{th} report type may be different from the j^{th} report type, where i and j are integers greater than or equal to 1, and i is less than or equal to j. Specifically, that the i^{th} report type is different from the j^{th} report type includes the following cases:
the i^{th} optimal beam index in the i^{th} report type is coded independently, and the j^{th} optimal beam index in the j^{th} report type and another piece of channel state information are coded jointly; or
a coded bit quantity of the i^{th} optimal beam index in the i^{th} report type is greater than or equal to a coded bit quantity of the j^{th} optimal beam index in the j^{th} report type; or
a code rate of the i^{th} optimal beam index in the i^{th} report type is less than or equal to a code rate of the j^{th} optimal beam index in the j^{th} report type; or
a coding mode (a first coding mode) of the i^{th} optimal beam index in the i^{th} report type is different from a coding mode (a second coding mode) of the j^{th} optimal beam index in the j^{th} report type, where reliability of the first coding mode is greater than or equal to that of the second coding mode.

By using different coding modes of optimal beam indices at different levels in the foregoing description, transmission reliability of the i^{th} optimal beam index in the i^{th} report type may be greater than or equal to that of the j^{th} optimal beam index in the j^{th} report type. Selection of the j^{th} optimal beam index in the j^{th} report type depends on selection of the i^{th} optimal beam index in the i^{th} report type. Therefore, in the foregoing multi-level manner, desirable performance of selection and reporting of an optimal transmit beam can be ensured.

In an optional embodiment, the first resource includes the second resource.

Specifically, M resources used to send the first-type reference signal may be first selected, and N resources selected from the M resources are used as resources to send the second-type reference signal. In this way, the N resources may be shared to send the first-type reference signal and the second-type reference signal, to implement resource sharing, thereby improving resource utilization.

In an optional embodiment, the second resource is all or a part of a remaining resource other than the first resource in the reference signal resource pool; or the first resource is all or a part of a remaining resource other than the second resource in the reference signal resource pool.

Specifically, if the first resource is all of the remaining resource other than the second resource in the reference signal resource pool, or the second resource is all of the remaining resource other than the first resource in the reference signal resource pool, it may be understood that the resource used for the first-type reference signal and the resource used for the second-type reference signal are in a complementary relationship. In this case, the network device only needs to send the first configuration information to the terminal device. After receiving the first configuration information and determining the resource used for the first-type reference signal, the terminal device may determine that the remaining resource other than the resource used for the first-type reference signal in the reference signal resource pool is all used to send the second-type reference signal. In this way, the network device does not need to send the second configuration information to the terminal device, thereby reducing required configuration signaling overheads.

It should be understood that the foregoing only describes how the network device configures the first-type reference signal, and the network device configures the second-type reference signal in a similar manner. Details are not described herein.

Alternatively, the first resource may be a part of a remaining resource other than the second resource in the reference signal resource pool, or the second resource may be a part of a remaining resource other than the first resource in the reference signal resource pool. In this case, if the network device needs to send the first-type reference signal and the second-type reference signal, the network device needs to send both the first configuration information and the second configuration information. Optionally, the first configuration information and the second configuration information may be indicated by same physical layer signaling, or may be separately indicated by different physical layer signaling. This is not limited in this embodiment of this application.

In an optional embodiment, the indication information includes at least one piece of the following information: a time-domain symbol quantity of the resource in the reference signal resource pool, a time-domain symbol location of the resource in the reference signal resource pool, a frequency-domain resource location of the resource in the reference signal resource pool, and port information of the resource in the reference signal resource pool.

In an optional embodiment, the sending, by the network device, indication information to a terminal device includes: sending, by the network device, the indication information to the terminal device by using higher layer signaling and/or physical layer signaling.

It should be understood that the higher layer signaling may be radio resource control (radio resource control, RRC) signaling, and the physical layer signaling may be downlink control information (downlink control information, DCI) signaling. The higher layer signaling and the physical layer signaling may be other signaling. This is not limited in this embodiment of this application.

In an optional embodiment, the sending, by the network device, first configuration information and/or second configuration information to the terminal device based on the reference signal resource pool includes: sending, by the network device, the first configuration information and/or the second configuration information to the terminal device by using the higher layer signaling and/or the physical layer signaling.

It should be understood that the higher layer signaling may be radio resource control (radio resource control, RRC) signaling, and the physical layer signaling may be downlink control information (downlink control information, DCI) signaling. The higher layer signaling and the physical layer signaling may be other signaling. This is not limited in this embodiment of this application.

In an optional embodiment, symbol information of the configured first-type reference signal and symbol information of the configured second-type reference signal constitute symbol information of the configured reference signal resource pool.

In a specific implementation, resources in the reference signal resource pool configured by using the higher layer signaling are L time-domain symbols (where L is an integer greater than or equal to 1), for example, L symbols in one subframe. When resources are specifically configured for the first-type reference signal and the second-type reference signal, the network device may specifically indicate K symbols of the L symbols used for the first-type reference signal (where K is an integer greater than or equal to 1) and remaining L-K symbols used for the second-type reference signal.

It should be understood that if the second-type reference signal is used to obtain channel quality information, the second-type reference signal needs to satisfy the following special requirements, for example, (1) transmission of at least two symbols; and (2) an interval between any two symbols being as large as possible. Therefore, for the resource for the first-type reference signal and the resource for the second-type reference signal, an allocation relationship of the L symbols in the reference signal resource pool may be a limited quantity of predefined values that satisfy the foregoing requirements. For example, when L = 10, a predefined time domain resource allocation relationship between two types of reference signals may be: 10+0, 0+10, 8+2, 7+3, 6+4, and 5+5. Herein, the foregoing resource allocation relationship between two types of reference signals may be represented in an x+y form, where x represents a quantity of time-domain symbols used to send the first-type reference signal, and y represents a quantity of time-domain symbols used to send the second-type reference signal. Specifically, 10+0 and 0+10 in the foregoing predefined time domain resource allocation relationship correspond to a special case of sending only the first-type reference signal and a special case of sending only the second-type reference signal respectively. 8+2 represents that the quantity of time-domain symbols used to send the first-type reference signal is 8 and the quantity of time-domain symbols used to send the second-type reference signal is 2. Other cases such as 7+3, 6+4, 5+5, and 8+2 are similar thereto. Details are not described herein.

In addition, the configuration signaling may be in a form of an L-bit bitmap bitmap. Each of the L bits is specifically used to indicate whether each of the corresponding L symbols is a symbol used for the first-type reference signal or a symbol used for the second-type reference signal. In this way, in the foregoing case, a quantity of required bits may be less than or equal to L. It should be understood that according to a specific design requirement of the second-type reference signal, when location distribution of time-domain resources for the second-type reference signal is limited, the quantity of required bits may be less than L. Otherwise, the quantity of required bits is equal to L.

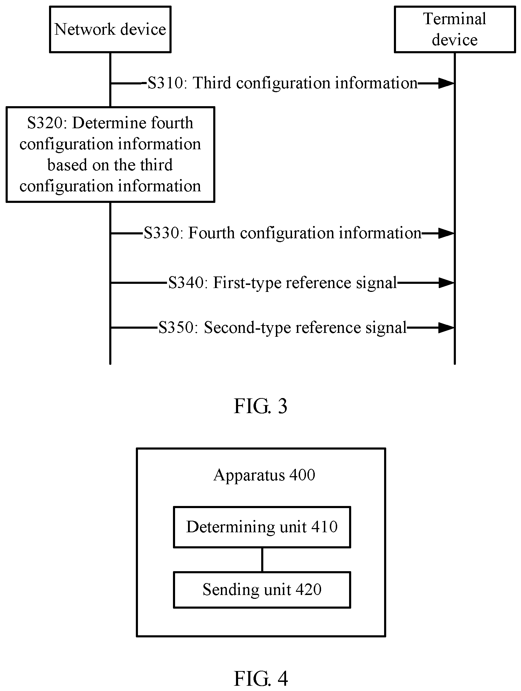

FIG. 3 is a schematic flowchart of another signal transmission method 300 according to an embodiment of this application. The method 300 may be applied to the system architecture 100 shown in FIG. 1. However, this embodiment of this application is not limited thereto.

S310: A network device sends third configuration information to a terminal device, where the third configuration information includes first port information of a port used to send a first-type reference signal and a second-type reference signal. Correspondingly, the terminal device receives the third configuration information.

S320: The network device determines fourth configuration information based on the third configuration information, where the fourth configuration information includes second port information of a remaining port used to send the second-type reference signal.

S330: The network device sends the fourth configuration information to the terminal device. Correspondingly, the terminal device receives the fourth configuration information.

S340: The network device sends the first-type reference signal to the terminal device based on the third configuration information. Correspondingly, the terminal device receives the first-type reference signal.

S350: The network device sends the second-type reference signal to the terminal device based on the third configuration information and the fourth configuration information. Correspondingly, the terminal device receives the second-type reference signal.

According to the signal transmission method in this embodiment of this application, the network device configures shared port information for the first-type reference signal and the second-type reference signal, and then configures port information of a remaining port for the second-type reference signal, so that port resources can be shared, and repeated configuration of same port information can be avoided, thereby reducing signaling overheads.

It should be understood that sequence numbers of the foregoing processes do not mean execution sequences. The execution sequences of the processes should be determined based on functions and internal logic of the processes, and should not be construed as any limitation on the implementation processes of this embodiment of this application.

Specifically, channel quality information needs to be obtained for the second-type reference signal, to be specific, a reference signal used to obtain channel quality information, so that a larger degree of freedom in spatial domain is required (a larger quantity of antenna ports in spatial domain corresponds to a larger degree of freedom in spatial domain). The first-type reference signal, to be specific, a reference signal used for beam management, is mainly used for selection of an optimal beam based on measurement of beam energy. Therefore, compared with the second-type reference signal, the first-type reference signal has a less demanding requirement on a degree of freedom (a port quantity) in spatial domain. In this embodiment of this application, a quantity of ports for the first-type reference signal is a subset of a quantity of ports for the second-type reference signal. Therefore, the network device may first send the third configuration information of the port information of ports for the first-type reference signal and the second-type reference signal to the terminal device. The port information may be referred to as a basic resource. The basic resource may further include a time domain location, a frequency domain location, a density, and the like of a reference signal. The network device configures, based on the basic resource, additional port information for the second-type reference signal, and sends the fourth configuration message carrying the additional port information to the terminal device.

In a specific implementation, when an antenna port quantity of resources for the first-type reference signal is 2 and an antenna port quantity of resources for the second-type reference signal is 4, the network device only needs to configure two newly added port resources for the second-type reference signal, so that resources for the first-type reference signal and resources for the second-type reference signal can be flexibly reused for each other, thereby reducing configuration signaling overheads of the network device.

In an optional embodiment, the first port information and the second port information include a quantity of antenna ports and/or a time-frequency domain resource mapping relationship of the antenna ports.

In an optional embodiment, a quantity of first antenna ports used to send the first-type reference signal is M, a quantity of second antenna ports used to send the second-type reference signal is N, and a frequency-domain resource location pattern of the M first antenna ports is the same as a frequency-domain resource location pattern of M second antenna ports of the N second antenna ports, where M and N are integers greater than or equal to 1, and M is less than or equal to N.

In an optional embodiment, the third configuration information includes information about the M first antenna ports, and the fourth configuration information includes information about N-M second antenna ports, other than the M first antenna ports, of the N second antenna ports.

In an optional embodiment, the M first antenna ports are obtained by performing a virtual weighting operation based on the N second antenna ports.

Specifically, there is a nested relationship between the M ports used to send the first-type reference signal and the N ports used to send the second-type reference signal. For example, the M ports for the first-type reference signal may be obtained by performing a virtual weighting operation on the N ports for the second-type reference signal. Virtual weighting may be performed in a form of a Walsh code or a discrete Fourier transform (discrete Fourier transform, DFT) matrix. For example, the DFT matrix is [1, 1, 1, 1], [1, 1, -1, -1], [1, -1, 1, -1], and [-1, 1, -1, 1]. It should be understood that the foregoing virtual weighting operation may be performed in another manner. This is not limited in this embodiment of this application.

In a specific implementation, when a quantity M of antenna ports for the first-type reference signal is equal to 2, a quantity N of antenna ports for the second-type reference signal is equal to 4, and a virtual weighting matrix is represented as [1, 1, 1, 1], a relationship between the four antenna ports for the second-type reference signal and the two antenna ports for the first-type reference signal satisfies y(p) = y0 and y(q) = y1. Herein, p = 0 or 1, q = 2 or 3, y0 and yl are two antenna ports for the first-type reference signal, and y(0), y(1), y(2), and y(3) are four antenna ports for the second-type reference signal. Herein, the first two weighting coefficients [1, 1] represent virtual weighting coefficients between first two antenna ports for the second-type reference signal and the first antenna port for the first-type reference signal. The last two weighting coefficients [1, 1] represent virtual weighting coefficients between the last two antenna ports for the second-type reference signal and the second antenna port for the first-type reference signal.

In an optional embodiment, the method further includes: sending, by the network device, a virtual weighting coefficient to the terminal device, where the virtual weighting coefficient is used to perform the virtual weighting operation. Correspondingly, the terminal device receives the virtual weighting coefficient sent by the network device.

In an optional embodiment, a virtual weighting coefficient used to perform the virtual weighting operation is predefined.

Specifically, the virtual weighting coefficient used to perform the virtual weighting operation may be determined through negotiation and agreement between the network device and the terminal device, or may be configured by the network device for the terminal device. This is not limited in this embodiment of this application.

In an optional embodiment, the third configuration information and the fourth configuration information further include at least one piece of the following information: a time-domain resource location, a frequency-domain resource location, and a density of the first-type reference signal or the second-type reference signal.

Specifically, the density of the second reference signal may be bound to a system parameter. In other words, different system parameters correspond to different reference signal densities. Herein, different system parameters correspond to different subcarrier spacings. For example, a first system parameter corresponds to a subcarrier spacing of 15 KHz, and a second system parameter corresponds to a subcarrier spacing of 30 KHz or 60 KHz.

A reference signal density that corresponds to a system parameter corresponding to a relatively small subcarrier spacing is related to a ratio between subcarrier spacings corresponding to two system parameters. In a specific implementation, a reference signal density that corresponds to a system parameter corresponding to a relatively small subcarrier spacing may be a reciprocal of a ratio between subcarrier spacings corresponding to two system parameters. However, this is not limited in this embodiment of this application. For example, when a ratio between subcarrier spacings corresponding to two system parameters is 2, a reference signal density that corresponds to a system parameter corresponding to a smaller subcarrier spacing is 1/2. In other words, one reference signal is placed between every two resource units.

When a same reference signal corresponds to at least two symbols, some indication information may be modulated on the second symbol that is repeated. The indication information may be used to indicate at least one piece of the following information: information about whether beamforming of a control channel is the same as beamforming of a service channel, and an indication of a transmission mode such as transmit diversity, open-loop transmission, and closed-loop transmission of a control channel. Optionally, the transmit mode of the control channel may also be indicated by physical layer control signaling such as DCI information. This is not limited in this embodiment of this application.

It should be understood that sequence numbers of the foregoing processes do not mean execution sequences. The execution sequences of the processes should be determined based on functions and internal logic of the processes, and should not be construed as any limitation on the implementation processes of this embodiment of this application.

The signal transmission method according to the embodiments of this application is described above in detail with reference to FIG. 1 to FIG. 3. A signal transmission apparatus according to embodiments of this application is described below in detail with reference to FIG. 4 to FIG. 11.

FIG. 4 shows a signal transmission apparatus 400 according to an embodiment of this application. The apparatus 400 includes:
a determining unit 410, configured to determine a reference signal resource pool, where a resource in the reference signal resource pool is used to send a first-type reference signal and/or a second-type reference signal; and
a sending unit 420, configured to send indication information to a terminal device, where the indication information is used to indicate a resource in the reference signal resource pool, where
the sending unit 420 is further configured to: send first configuration information and/or second configuration information to the terminal device based on the reference signal resource pool, where the first configuration information is used to indicate a first resource that is in the reference signal resource pool and that is used to send the first-type reference signal, and the second configuration information is used to indicate a second resource that is in the reference signal resource pool and that is used to send the second-type reference signal; and send the first-type reference signal to the terminal device based on the first configuration information, and/or send the second-type reference signal to the terminal device based on the second configuration information.

For the signal transmission apparatus in this embodiment of this application, a network device determines the reference signal resource pool before sending the first-type reference signal and/or the second-type reference signal, and configures a resource in the reference signal resource pool for the first-type reference signal and/or the second-type reference signal, so that resources used for different types of reference signals can be allocated flexibly, to share resources among different types of reference signals, thereby improving utilization of reference signal resources.

Optionally, the first resource includes the second resource.

Optionally, the second resource is all or a part of a remaining resource other than the first resource in the reference signal resource pool; or the first resource is all or a part of a remaining resource other than the second resource in the reference signal resource pool.

Optionally, the indication information includes at least one piece of the following information: a time-domain symbol quantity of the resource in the reference signal resource pool, a time-domain symbol location of the resource in the reference signal resource pool, a frequency-domain resource location of the resource in the reference signal resource pool, and port information of the resource in the reference signal resource pool.

Optionally, the sending unit 420 is specifically configured to send the indication information to the terminal device by using higher layer signaling and/or physical layer signaling.

Optionally, the sending unit 420 is specifically configured to send the first configuration information and/or the second configuration information to the terminal device by using the higher layer signaling and/or the physical layer signaling.

It should be understood that the apparatus 400 herein is embodied in the form of functional units. The term "unit" herein may refer to an application specific integrated circuit (application specific integrated circuit, ASIC), an electronic circuit, a processor (for example, a shared processor, a dedicated processor or a packet processor) configured to execute one or more software or firmware programs and a memory, a combined logic circuit and/or another appropriate component supporting the described functions. In an optional example, persons skilled in the art may understand that the apparatus 400 may be specifically the network device in the foregoing embodiments. The apparatus 400 may be configured to perform procedures and/or steps that correspond to the network device in the foregoing method embodiments. To avoid repetition, details are not described herein again.

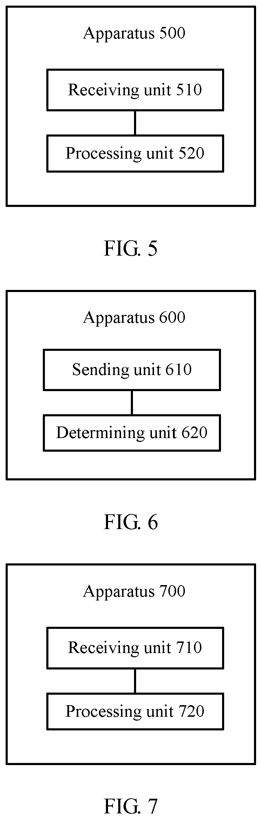

FIG. 5 shows a signal transmission apparatus 500 according to an embodiment of this application. The apparatus 500 includes:
a receiving unit 510, configured to receive indication information sent by a network device, where the indication information is used to indicate a resource in a reference signal resource pool, and a resource in the reference signal resource pool is used to send a first-type reference signal and/or a second-type reference signal, where
the receiving unit 510 is further configured to: receive first configuration information and/or second configuration information sent by the network device, where the first configuration information is used to indicate a first resource that is in the reference signal resource pool and that is used to send the first-type reference signal, and the second configuration information is used to indicate a second resource that is in the reference signal resource pool and that is used to send the second-type reference signal; and receive, based on the indication information and the first configuration information and/or the second configuration information, the first-type reference signal and/or the second-type reference signal sent by the network device; and
a processing unit 520, configured to process the first-type reference signal and/or the second-type reference signal.

For the signal transmission apparatus in this embodiment of this application, the network device configures shared port information for the first-type reference signal and the second-type reference signal, and then configures port information of a remaining port for the second-type reference signal, so that port resources can be shared, and repeated configuration of same port information can be avoided, thereby reducing signaling overheads.

Optionally, the first resource includes the second resource.

Optionally, the second resource is all or a part of a remaining resource other than the first resource in the reference signal resource pool; or the first resource is all or a part of a remaining resource other than the second resource in the reference signal resource pool.

Optionally, the indication information includes at least one piece of the following information: a time-domain symbol quantity of the resource in the reference signal resource pool, a time-domain symbol location of the resource in the reference signal resource pool, a frequency-domain resource location of the resource in the reference signal resource pool, and port information of the resource in the reference signal resource pool.

Optionally, the receiving unit 510 is specifically configured to receive, by using higher layer signaling and/or physical layer signaling, the indication information sent by the network device.

Optionally, the receiving unit 510 is specifically configured to receive, by using the higher layer signaling and/or the physical layer signaling, the first configuration information and/or the second configuration information sent by the network device.

It should be understood that the apparatus 500 herein is embodied in the form of functional units. The term "unit" herein may refer to an application specific integrated circuit (application specific integrated circuit, ASIC), an electronic circuit, a processor (for example, a shared processor, a dedicated processor or a packet processor) configured to execute one or more software or firmware programs and a memory, a combined logic circuit and/or another appropriate component supporting the described functions. In an optional example, persons skilled in the art may understand that the apparatus 500 may be specifically the terminal device in the foregoing embodiments. The apparatus 500 may be configured to perform procedures and/or steps that correspond to the terminal device in the foregoing method embodiments. To avoid repetition, details are not described herein again.

FIG. 6 shows a signal transmission apparatus 600 according to an embodiment of this application. The apparatus 600 includes:
a sending unit 610, configured to send third configuration information to a terminal device, where the third configuration information includes first port information of a port used to send a first-type reference signal and a second-type reference signal; and
a determining unit 620, configured to determine fourth configuration information based on the third configuration information, where the fourth configuration information includes second port information of a remaining port used to send the second-type reference signal, where
the sending unit 610 is further configured to: send the fourth configuration information to the terminal device; send the first-type reference signal to the terminal device based on the third configuration information; and send the second-type reference signal to the terminal device based on the third configuration information and the fourth configuration information.

Optionally, the first port information and the second port information include a quantity of antenna ports and/or a time-frequency domain resource mapping relationship of the antenna ports.

Optionally, a quantity of first antenna ports used to send the first-type reference signal is M, a quantity of second antenna ports used to send the second-type reference signal is N, and a frequency-domain resource location pattern of the M first antenna ports is the same as a frequency-domain resource location pattern of M second antenna ports of the N second antenna ports, where M and N are integers greater than or equal to 1, and M is less than or equal to N.

Optionally, the third configuration information includes information about the M first antenna ports, and the fourth configuration information includes information about N-M second antenna ports, other than the M first antenna ports, of the N second antenna ports.

Optionally, the M first antenna ports are obtained by performing a virtual weighting operation based on the N second antenna ports.

Optionally, the sending unit 610 is further configured to send a virtual weighting coefficient to the terminal device, where the virtual weighting coefficient is used to perform the virtual weighting operation.

Optionally, a virtual weighting coefficient used to perform the virtual weighting operation is predefined.

Optionally, the third configuration information and the fourth configuration information further include at least one piece of the following information: a time-domain resource location, a frequency-domain resource location, and a density of the first-type reference signal or the second-type reference signal.

It should be understood that the apparatus 600 herein is embodied in the form of functional units. The term "unit" herein may refer to an application specific integrated circuit (application specific integrated circuit, ASIC), an electronic circuit, a processor (for example, a shared processor, a dedicated processor or a packet processor) configured to execute one or more software or firmware programs and a memory, a combined logic circuit and/or another appropriate component supporting the described functions. In an optional example, persons skilled in the art may understand that the apparatus 600 may be specifically the network device in the foregoing embodiments. The apparatus 600 may be configured to perform procedures and/or steps that correspond to the network device in the foregoing method embodiments. To avoid repetition, details are not described herein again.

FIG. 7 shows a signal transmission apparatus 700 according to an embodiment of this application. The apparatus 700 includes:
a receiving unit 710, configured to receive third configuration information sent by a network device, where the third configuration information includes first port information of a port used to send a first-type reference signal and a second-type reference signal, where
the receiving unit 710 is further configured to receive fourth configuration information sent by the network device, where the fourth configuration information includes second port information of a remaining port used to send the second-type reference signal; receive, based on the third configuration information, the first-type reference signal sent by the network device; and receive, based on the third configuration information and the fourth configuration information, the second-type reference signal sent by the network device; and
a processing unit 720, configured to process the first-type reference signal and/or the second-type reference signal.

Optionally, the first port information and the second port information include a quantity of antenna ports and/or a time-frequency domain resource mapping relationship of the antenna ports.

Optionally, a quantity of first antenna ports used to send the first-type reference signal is M, a quantity of second antenna ports used to send the second-type reference signal is N, and a frequency-domain resource location pattern of the M first antenna ports is the same as a frequency-domain resource location pattern of M second antenna ports of the N second antenna ports, where M and N are integers greater than or equal to 1, and M is less than or equal to N.

Optionally, the third configuration information includes information about the M first antenna ports, and the fourth configuration information includes information about N-M second antenna ports, other than the M first antenna ports, of the N second antenna ports.

Optionally, the M first antenna ports are obtained by performing a virtual weighting operation based on the N second antenna ports.

Optionally, the receiving unit 710 is further configured to: receive a virtual weighting coefficient sent by the network device, where the virtual weighting coefficient is used to perform the virtual weighting operation.

Optionally, a virtual weighting coefficient used to perform the virtual weighting operation is predefined.

Optionally, the third configuration information and the fourth configuration information further include at least one piece of the following information: a time-domain resource location, a frequency-domain resource location, and a density of the first-type reference signal or the second-type reference signal.

It should be understood that the apparatus 700 herein is embodied in the form of functional units. The term "unit" herein may refer to an application specific integrated circuit (application specific integrated circuit, ASIC), an electronic circuit, a processor (for example, a shared processor, a dedicated processor or a packet processor) configured to execute one or more software or firmware programs and a memory, a combined logic circuit and/or another appropriate component supporting the described functions. In an optional example, persons skilled in the art may understand that the apparatus 700 may be specifically the terminal device in the foregoing embodiments. The apparatus 700 may be configured to perform procedures and/or steps that correspond to the terminal device in the foregoing method embodiments. To avoid repetition, details are not described herein again.

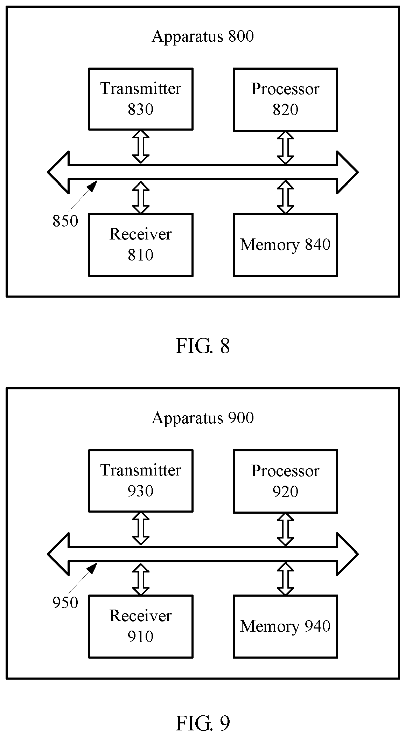

FIG. 8 shows a signal transmission apparatus 800 according to an embodiment of this application. The apparatus 800 includes a receiver 810, a processor 820, a transmitter 830, a memory 840, and a bus system 850. The receiver 810, the processor 820, the transmitter 830, and the memory 840 are connected by using the bus system 850. The memory 840 is configured to store an instruction. The processor 820 is configured to execute the instruction stored in the memory 840 to control the receiver 810 to receive a signal and control the transmitter 830 to send an instruction.

The processor 820 is configured to determine a reference signal resource pool, where a resource in the reference signal resource pool is used to send a first-type reference signal and/or a second-type reference signal. The transmitter 830 is configured to send indication information to a terminal device, where the indication information is used to indicate a resource in the reference signal resource pool. The transmitter 830 is further configured to: send first configuration information and/or second configuration information to the terminal device based on the reference signal resource pool, where the first configuration information is used to indicate a first resource that is in the reference signal resource pool and that is used to send the first-type reference signal, and the second configuration information is used to indicate a second resource that is in the reference signal resource pool and that is used to send the second-type reference signal; and send the first-type reference signal to the terminal device based on the first configuration information, and/or send the second-type reference signal to the terminal device based on the second configuration information.

It should be understood that the apparatus 800 may be specifically the network device in the foregoing embodiments, and may be configured to perform steps and/or procedures that correspond to the network device in the foregoing method embodiments. For example, in this embodiment of this application, a function to be implemented by the processor 820 may be implemented by the determining unit 410 in the embodiment shown in FIG. 4; and a function to be implemented by the transmitter 830 may be implemented by the sending unit 420 in the embodiment shown in FIG. 4, or implemented by the processor 820 controlling the sending unit 420. Optionally, the memory 840 may include a read-only memory and a random access memory, and provides an instruction and data for the processor. Apart of the memory may further include a nonvolatile random access memory. For example, the memory may further store device type information. The processor 820 may be configured to execute the instruction stored in the memory, and when the processor executes the instruction, the processor may perform steps and/or procedures that correspond to the network device in the foregoing method embodiments.

FIG. 9 shows a signal transmission apparatus 900 according to an embodiment of this application. The apparatus 900 includes a receiver 910, a processor 920, a transmitter 930, a memory 940, and a bus system 950. The receiver 910, the processor 920, the transmitter 930, and the memory 940 are connected by using the bus system 950. The memory 940 is configured to store an instruction. The processor 920 is configured to execute the instruction stored in the memory 940 to control the receiver 910 to receive a signal and control the transmitter 930 to send an instruction.

The receiver 910 is configured to receive indication information sent by a network device, where the indication information is used to indicate a resource in a reference signal resource pool, and a resource in the reference signal resource pool is used to send a first-type reference signal and/or a second-type reference signal. The receiver 910 is further configured to: receive first configuration information and/or second configuration information sent by the network device, where the first configuration information is used to indicate a first resource that is in the reference signal resource pool and that is used to send the first-type reference signal, and the second configuration information is used to indicate a second resource that is in the reference signal resource pool and that is used to send the second-type reference signal; and receive, based on the indication information and the first configuration information and/or the second configuration information, the first-type reference signal and/or the second-type reference signal sent by the network device.

It should be understood that the apparatus 900 may be specifically the terminal device in the foregoing embodiments, and may be configured to perform steps and/or procedures that correspond to the terminal device in the foregoing method embodiments. For example, in this embodiment of this application, a function to be implemented by the receiver 930 may be implemented by the receiving unit 510 in the embodiment shown in FIG. 5, or implemented by the processor 920 controlling the receiving unit 510; and a function to be implemented by the processor 920 may be implemented by the processing unit 520 in the embodiment shown in FIG. 5. Optionally, the memory 940 may include a read-only memory and a random access memory, and provides an instruction and data for the processor. Apart of the memory may further include a nonvolatile random access memory. For example, the memory may further store device type information. The processor 920 may be configured to execute the instruction stored in the memory, and when the processor executes the instruction, the processor may perform steps and/or procedures that correspond to the terminal device in the foregoing method embodiments.

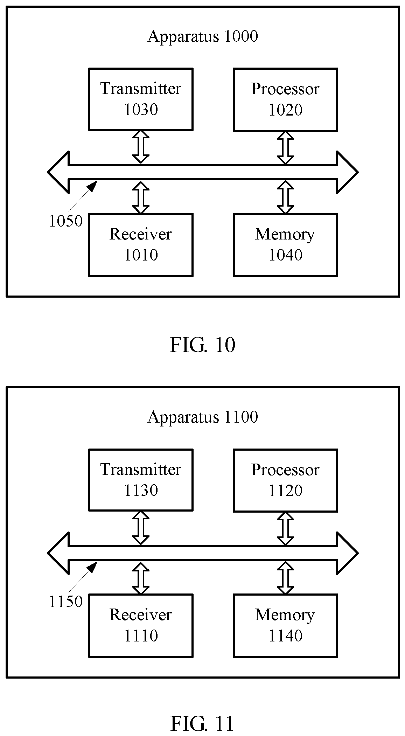

FIG. 10 shows a signal transmission apparatus 1000 according to an embodiment of this application. The apparatus 1000 includes a receiver 1010, a processor 1020, a transmitter 1030, a memory 1040, and a bus system 1050. The receiver 1010, the processor 1020, the transmitter 1030, and the memory 1040 are connected by using the bus system 1050. The memory 1040 is configured to store an instruction. The processor 1020 is configured to execute the instruction stored in the memory 1040 to control the receiver 1010 to receive a signal and control the transmitter 1030 to send an instruction.

The transmitter 1030 is configured to send third configuration information to a terminal device, where the third configuration information includes first port information of a port used to send a first-type reference signal and a second-type reference signal. The processor 1020 is configured to determine fourth configuration information based on the third configuration information, where the fourth configuration information includes second port information of a remaining port used to send the second-type reference signal. The transmitter 1030 is further configured to: send the fourth configuration information to the terminal device; send the first-type reference signal to the terminal device based on the third configuration information; and send the second-type reference signal to the terminal device based on the third configuration information and the fourth configuration information.

It should be understood that the apparatus 1000 may be specifically the network device in the foregoing embodiments, and may be configured to perform steps and/or procedures that correspond to the network device in the foregoing method embodiments. For example, in this embodiment of this application, a function to be implemented by the transmitter 1030 may be implemented by the sending unit 610 in the embodiment shown in FIG. 6, or implemented by the processor 1020 controlling the sending unit 610; and a function to be implemented by the processor 1020 may be implemented by the determining unit 620 in the embodiment shown in FIG. 6. Optionally, the memory 1040 may include a read-only memory and a random access memory, and provides an instruction and data for the processor. A part of the memory may further include a nonvolatile random access memory. For example, the memory may further store device type information. The processor 1020 may be configured to execute the instruction stored in the memory, and when the processor executes the instruction, the processor may perform steps and/or procedures that correspond to the network device in the foregoing method embodiments.

FIG. 11 shows a signal transmission apparatus 1100 according to an embodiment of this application. The apparatus 1100 includes a receiver 1110, a processor 1120, a transmitter 1130, a memory 1140, and a bus system 1150. The receiver 1110, the processor 1120, the transmitter 1130, and the memory 1140 are connected by using the bus system 1150. The memory 1140 is configured to store an instruction. The processor 1120 is configured to execute the instruction stored in the memory 1140 to control the receiver 1110 to receive a signal and control the transmitter 1130 to send an instruction.

The receiver 1110 is configured to receive third configuration information sent by a network device, where the third configuration information includes first port information of a port used to send a first-type reference signal and a second-type reference signal. The receiver 1110 is further configured to: receive fourth configuration information sent by the network device, where the fourth configuration information includes second port information of a remaining port used to send the second-type reference signal; receive, based on the third configuration information, the first-type reference signal sent by the network device; and receive, based on the third configuration information and the fourth configuration information, the second-type reference signal sent by the network device.

It should be understood that the apparatus 1100 may be specifically the terminal device in the foregoing embodiments, and may be configured to perform steps and/or procedures that correspond to the terminal device in the foregoing method embodiments. For example, in this embodiment of this application, a function to be implemented by the receiver 1130 may be implemented by the receiving unit 710 in the embodiment shown in FIG. 7, or implemented by the processor 1120 controlling the receiving unit 710; and a function to be implemented by the processor 1120 may be implemented by the processing unit 720 in the embodiment shown in FIG. 7. Optionally, the memory 1140 may include a read-only memory and a random access memory, and provides an instruction and data for the processor. Apart of the memory may further include a nonvolatile random access memory. For example, the memory may further store device type information. The processor 1120 may be configured to execute the instruction stored in the memory, and when the processor executes the instruction, the processor may perform steps and/or procedures that correspond to the terminal device in the foregoing method embodiments.

It should be understood that in the embodiments of this application, the processor in the foregoing apparatus may be a central processing unit (central processing unit, CPU), or the processor may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor, or the processor may be any conventional processor or the like.

In an implementation process, steps in the foregoing methods can be implemented by using a hardware integrated logic circuit in the processor, or by using instructions in a form of software. The steps of the method disclosed with reference to the embodiments of this application may be directly performed by a hardware processor, or may be performed by using a combination of hardware in the processor and a software unit. A software unit may be located in a mature storage medium in the art, such as a random access memory, a flash memory, a read-only memory, a programmable read-only memory, an electrically erasable programmable memory, a register, or the like. The storage medium is located in the memory, and the processor executes instructions in the memory and completes the steps in the foregoing methods in combination with hardware of the processor. To avoid repetition, details are not described herein again.

Persons of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. Persons of ordinary skill in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any modification or replacement readily figured out by persons skilled in the art within the technical scope disclosed in this application shall fall within the protection scope of this application. Therefore, the protection scope of this application shall be subject to the protection scope of the claims.

## Claims

1. A signal transmission method, comprising:
determining, by a network device, a reference signal resource pool, wherein a resource in the reference signal resource pool is used to send a first-type reference signal and/or a second-type reference signal;
sending, by the network device, indication information to a terminal device, wherein the indication information is used to indicate a resource in the reference signal resource pool;
sending, by the network device, first configuration information and/or second configuration information to the terminal device based on the reference signal resource pool, wherein the first configuration information is used to indicate a first resource that is in the reference signal resource pool and that is used to send the first-type reference signal, and the second configuration information is used to indicate a second resource that is in the reference signal resource pool and that is used to send the second-type reference signal; and
sending, by the network device, the first-type reference signal to the terminal device based on the first configuration information, and/or sending, by the network device, the second-type reference signal to the terminal device based on the second configuration information.

2. The method according to claim 1, wherein the first resource comprises the second resource.

3. The method according to claim 1, wherein the second resource is all or a part of a remaining resource other than the first resource in the reference signal resource pool; or
the first resource is all or a part of a remaining resource other than the second resource in the reference signal resource pool.

4. The method according to any one of claims 1 to 3, wherein the indication information comprises at least one piece of the following information:
a time-domain symbol quantity of the resource in the reference signal resource pool, a time-domain symbol location of the resource in the reference signal resource pool, a frequency-domain resource location of the resource in the reference signal resource pool, and port information of the resource in the reference signal resource pool.

5. The method according to any one of claims 1 to 4, wherein the sending, by the network device, indication information to a terminal device comprises:
sending, by the network device, the indication information to the terminal device by using higher layer signaling and/or physical layer signaling.

6. The method according to any one of claims 1 to 5, wherein the sending, by the network device, first configuration information and/or second configuration information to the terminal device based on the reference signal resource pool comprises:
sending, by the network device, the first configuration information and/or the second configuration information to the terminal device by using the higher layer signaling and/or the physical layer signaling.

7. A signal transmission method, comprising:
receiving, by a terminal device, indication information sent by a network device, wherein the indication information is used to indicate a resource in a reference signal resource pool, and a resource in the reference signal resource pool is used to send a first-type reference signal and/or a second-type reference signal;
receiving, by the terminal device, first configuration information and/or second configuration information sent by the network device, wherein the first configuration information is used to indicate a first resource that is in the reference signal resource pool and that is used to send the first-type reference signal, and the second configuration information is used to indicate a second resource that is in the reference signal resource pool and that is used to send the second-type reference signal; and
receiving, by the terminal device based on the indication information and the first configuration information and/or the second configuration information, the first-type reference signal and/or the second-type reference signal sent by the network device.

8. The method according to claim 7, wherein the first resource comprises the second resource.

9. The method according to claim 7, wherein the second resource is all or a part of a remaining resource other than the first resource in the reference signal resource pool; or
the first resource is all or a part of a remaining resource other than the second resource in the reference signal resource pool.

10. The method according to any one of claims 7 to 9, wherein the indication information comprises at least one piece of the following information:
a time-domain symbol quantity of the resource in the reference signal resource pool, a time-domain symbol location of the resource in the reference signal resource pool, a frequency-domain resource location of the resource in the reference signal resource pool, and port information of the resource in the reference signal resource pool.

11. The method according to any one of claims 7 to 10, wherein the receiving, by a terminal device, indication information sent by a network device comprises:
receiving, by the terminal device by using higher layer signaling and/or physical layer signaling, the indication information sent by the network device.

12. The method according to any one of claims 7 to 11, wherein the receiving, by the terminal device, first configuration information and/or second configuration information sent by the network device comprises:
receiving, by the terminal device by using the higher layer signaling and/or the physical layer signaling, the first configuration information and/or the second configuration information sent by the network device.

13. A signal transmission method, comprising:
sending, by a network device, third configuration information to a terminal device, wherein the third configuration information comprises first port information of a port used to send a first-type reference signal and a second-type reference signal;
determining, by the network device, fourth configuration information based on the third configuration information, wherein the fourth configuration information comprises second port information of a remaining port used to send the second-type reference signal;
sending, by the network device, the fourth configuration information to the terminal device;
sending, by the network device, the first-type reference signal to the terminal device based on the third configuration information; and
sending, by the network device, the second-type reference signal to the terminal device based on the third configuration information and the fourth configuration information.

14. The method according to claim 13, wherein the first port information and the second port information comprise a quantity of antenna ports and/or a time-frequency domain resource mapping relationship of the antenna ports.

15. The method according to claim 14, wherein a quantity of first antenna ports used to send the first-type reference signal is M, a quantity of second antenna ports used to send the second-type reference signal is N, and a frequency-domain resource location pattern of the M first antenna ports is the same as a frequency-domain resource location pattern of M second antenna ports of the N second antenna ports, wherein
M and N are integers greater than or equal to 1, and M is less than or equal to N.

16. The method according to claim 15, wherein the third configuration information comprises information about the M first antenna ports, and the fourth configuration information comprises information about N-M second antenna ports, other than the M first antenna ports, of the N second antenna ports.

17. The method according to claim 15 or 16, wherein the M first antenna ports are obtained by performing a virtual weighting operation based on the N second antenna ports.

18. The method according to claim 17, wherein the method further comprises:
sending, by the network device, a virtual weighting coefficient to the terminal device, wherein the virtual weighting coefficient is used to perform the virtual weighting operation.

19. The method according to claim 17, wherein a virtual weighting coefficient used to perform the virtual weighting operation is predefined.

20. The method according to any one of claims 13 to 19, wherein the third configuration information and the fourth configuration information further comprise at least one piece of the following information:
a time-domain resource location, a frequency-domain resource location, and a density of the first-type reference signal or the second-type reference signal.

21. A signal transmission method, comprising:
receiving, by a terminal device, third configuration information sent by a network device, wherein the third configuration information comprises first port information of a port used to send a first-type reference signal and a second-type reference signal;
receiving, by the terminal device, fourth configuration information sent by the network device, wherein the fourth configuration information comprises second port information of a remaining port used to send the second-type reference signal;
receiving, by the terminal device based on the third configuration information, the first-type reference signal sent by the network device; and
receiving, by the terminal device based on the third configuration information and the fourth configuration information, the second-type reference signal sent by the network device.

22. The method according to claim 21, wherein the first port information and the second port information comprise a quantity of antenna ports and/or a time-frequency domain resource mapping relationship of the antenna ports.

23. The method according to claim 22, wherein a quantity of first antenna ports used to send the first-type reference signal is M, a quantity of second antenna ports used to send the second-type reference signal is N, and a frequency-domain resource location pattern of the M first antenna ports is the same as a frequency-domain resource location pattern of M second antenna ports of the N second antenna ports, wherein
M and N are integers greater than or equal to 1, and M is less than or equal to N.

24. The method according to claim 23, wherein the third configuration information comprises information about the M first antenna ports, and the fourth configuration information comprises information about N-M second antenna ports, other than the M first antenna ports, of the N second antenna ports.

25. The method according to claim 23 or 24, wherein the M first antenna ports are obtained by performing a virtual weighting operation based on the N second antenna ports.

26. The method according to claim 25, wherein the method further comprises:
receiving, by the terminal device, a virtual weighting coefficient sent by the network device, wherein the virtual weighting coefficient is used to perform the virtual weighting operation.

27. The method according to claim 25, wherein a virtual weighting coefficient used to perform the virtual weighting operation is predefined.

28. The method according to any one of claims 21 to 27, wherein the third configuration information and the fourth configuration information further comprise at least one piece of the following information:
a time-domain resource location, a frequency-domain resource location, and a density of the first-type reference signal or the second-type reference signal.

29. A signal transmission apparatus, comprising:
a determining unit, configured to determine a reference signal resource pool, wherein a resource in the reference signal resource pool is used to send a first-type reference signal and/or a second-type reference signal; and
a sending unit, configured to send indication information to a terminal device, wherein the indication information is used to indicate a resource in the reference signal resource pool, wherein
the sending unit is further configured to:
send first configuration information and/or second configuration information to the terminal device based on the reference signal resource pool, wherein the first configuration information is used to indicate a first resource that is in the reference signal resource pool and that is used to send the first-type reference signal, and the second configuration information is used to indicate a second resource that is in the reference signal resource pool and that is used to send the second-type reference signal; and
send the first-type reference signal to the terminal device based on the first configuration information, and/or send the second-type reference signal to the terminal device based on the second configuration information.

30. The apparatus according to claim 29, wherein the first resource comprises the second resource.

31. The apparatus according to claim 29, wherein the second resource is all or a part of a remaining resource other than the first resource in the reference signal resource pool; or
the first resource is all or a part of a remaining resource other than the second resource in the reference signal resource pool.

32. The apparatus according to any one of claims 29 to 31, wherein the indication information comprises at least one piece of the following information:
a time-domain symbol quantity of the resource in the reference signal resource pool, a time-domain symbol location of the resource in the reference signal resource pool, a frequency-domain resource location of the resource in the reference signal resource pool, and port information of the resource in the reference signal resource pool.

33. The apparatus according to any one of claims 29 to 32, wherein the sending unit is specifically configured to:
send the indication information to the terminal device by using higher layer signaling and/or physical layer signaling.

34. The apparatus according to any one of claims 29 to 33, wherein the sending unit is specifically configured to:
send the first configuration information and/or the second configuration information to the terminal device by using the higher layer signaling and/or the physical layer signaling.

35. A signal transmission apparatus, comprising:
a receiving unit, configured to receive indication information sent by a network device, wherein the indication information is used to indicate a resource in a reference signal resource pool, and a resource in the reference signal resource pool is used to send a first-type reference signal and/or a second-type reference signal, wherein
the receiving unit is further configured to:
receive first configuration information and/or second configuration information sent by the network device, wherein the first configuration information is used to indicate a first resource that is in the reference signal resource pool and that is used to send the first-type reference signal, and the second configuration information is used to indicate a second resource that is in the reference signal resource pool and that is used to send the second-type reference signal; and
receive, based on the indication information and the first configuration information and/or the second configuration information, the first-type reference signal and/or the second-type reference signal sent by the network device.

36. The apparatus according to claim 35, wherein the first resource comprises the second resource.

37. The apparatus according to claim 35, wherein the second resource is all or a part of a remaining resource other than the first resource in the reference signal resource pool; or
the first resource is all or a part of a remaining resource other than the second resource in the reference signal resource pool.

38. The apparatus according to any one of claims 35 to 37, wherein the indication information comprises at least one piece of the following information:
a time-domain symbol quantity of the resource in the reference signal resource pool, a time-domain symbol location of the resource in the reference signal resource pool, a frequency-domain resource location of the resource in the reference signal resource pool, and port information of the resource in the reference signal resource pool.

39. The apparatus according to any one of claims 35 to 38, wherein the receiving unit is specifically configured to:
receive, by using higher layer signaling and/or physical layer signaling, the indication information sent by the network device.

40. The apparatus according to any one of claims 35 to 39, wherein the receiving unit is specifically configured to:
receive, by using the higher layer signaling and/or the physical layer signaling, the first configuration information and/or the second configuration information sent by the network device.

41. A signal transmission apparatus, comprising:
a sending unit, configured to send third configuration information to a terminal device, wherein the third configuration information comprises first port information of a port used to send a first-type reference signal and a second-type reference signal; and
a determining unit, configured to determine fourth configuration information based on the third configuration information, wherein the fourth configuration information comprises second port information of a remaining port used to send the second-type reference signal, wherein
the sending unit is further configured to:
send the fourth configuration information to the terminal device;
send the first-type reference signal to the terminal device based on the third configuration information; and
send the second-type reference signal to the terminal device based on the third configuration information and the fourth configuration information.

42. The apparatus according to claim 41, wherein the first port information and the second port information comprise a quantity of antenna ports and/or a time-frequency domain resource mapping relationship of the antenna ports.

43. The apparatus according to claim 42, wherein a quantity of first antenna ports used to send the first-type reference signal is M, a quantity of second antenna ports used to send the second-type reference signal is N, and a frequency-domain resource location pattern of the M first antenna ports is the same as a frequency-domain resource location pattern of M second antenna ports of the N second antenna ports, wherein
M and N are integers greater than or equal to 1, and M is less than or equal to N.

44. The apparatus according to claim 43, wherein the third configuration information comprises information about the M first antenna ports, and the fourth configuration information comprises information about N-M second antenna ports, other than the M first antenna ports, of the N second antenna ports.

45. The apparatus according to claim 43 or 44, wherein the M first antenna ports are obtained by performing a virtual weighting operation based on the N second antenna ports.

46. The apparatus according to claim 45, wherein the sending unit is further configured to:
send a virtual weighting coefficient to the terminal device, wherein the virtual weighting coefficient is used to perform the virtual weighting operation.

47. The apparatus according to claim 45, wherein a virtual weighting coefficient used to perform the virtual weighting operation is predefined.

48. The apparatus according to any one of claims 41 to 47, wherein the third configuration information and the fourth configuration information further comprise at least one piece of the following information:
a time-domain resource location, a frequency-domain resource location, and a density of the first-type reference signal or the second-type reference signal.

49. A signal transmission apparatus, comprising:
a receiving unit, configured to receive third configuration information sent by a network device, wherein the third configuration information comprises first port information of a port used to send a first-type reference signal and a second-type reference signal, wherein
the receiving unit is further configured to:
receive fourth configuration information sent by the network device, wherein the fourth configuration information comprises second port information of a remaining port used to send the second-type reference signal;
receive, based on the third configuration information, the first-type reference signal sent by the network device; and
receive, based on the third configuration information and the fourth configuration information, the second-type reference signal sent by the network device.

50. The apparatus according to claim 49, wherein the first port information and the second port information comprise a quantity of antenna ports and/or a time-frequency domain resource mapping relationship of the antenna ports.

51. The apparatus according to claim 50, wherein a quantity of first antenna ports used to send the first-type reference signal is M, a quantity of second antenna ports used to send the second-type reference signal is N, and a frequency-domain resource location pattern of the M first antenna ports is the same as a frequency-domain resource location pattern of M second antenna ports of the N second antenna ports, wherein
M and N are integers greater than or equal to 1, and M is less than or equal to N.

52. The apparatus according to claim 51, wherein the third configuration information comprises information about the M first antenna ports, and the fourth configuration information comprises information about N-M second antenna ports, other than the M first antenna ports, of the N second antenna ports.

53. The apparatus according to claim 51 or 52, wherein the M first antenna ports are obtained by performing a virtual weighting operation based on the N second antenna ports.

54. The apparatus according to claim 53, wherein the receiving unit is further configured to:
receive a virtual weighting coefficient sent by the network device, wherein the virtual weighting coefficient is used to perform the virtual weighting operation.

55. The apparatus according to claim 53, wherein a virtual weighting coefficient used to perform the virtual weighting operation is predefined.

56. The apparatus according to any one of claims 49 to 55, wherein the third configuration information and the fourth configuration information further comprise at least one piece of the following information:
a time-domain resource location, a frequency-domain resource location, and a density of the first-type reference signal or the second-type reference signal.
